# NEUE EUROPÄISCHE PATENTSCHRIFT

(11) **EP 2 130 630 B2**
(45) Veröffentlichungstag und Bekanntmachung des Hinweises auf die Entscheidung über den Einspruch: **24.01.2018**
(45) Hinweis auf die Patenterteilung: 09.03.2011
(21) Anmeldenummer: 09161743.1
(22) Anmeldetag: 03.06.2009
(51) Int. Cl.: B23C 3/00, B23C 3/13

(54) **Verfahren zum Planfräsen von Werkstückoberflächen**
Method for face milling workpiece surfaces
Procédé de fraisage de plan de surfaces de pièces usinées

(30) Priorität: 06.06.2008 DE 102008027197
(43) Veröffentlichungstag der Anmeldung: 09.12.2009
(73) Patentinhaber: Status Pro Maschinenmesstechnik GmbH, 44866 Bochum (DE)
(72) Erfinder: Knode, Burkhard, 45134 Essen (DE); Foley, David, 44799 Bochum (DE)
(74) Vertreter: Grundmann, Dirk

(56) Entgegenhaltungen:
- WO-A1-97/15403
- CA- - 2 058 212
- DE-A1-102007 026 100
- JP-A- 2002 172 513
- JP-A- 2007 044 729
- US-B- 4 337 566
- 'MATLAB, Dreidimensionale Grafiken' MATLAB Seite 2

## Beschreibung

Die Erfindung betrifft ein Verfahren zum zerspanenden Bearbeiten einer Werkstückfläche eines Werkstücks.

Dokument JP 2007-44729 offenbart ein Verfahren zum zerspanenden Bearbeiten einer Werkstückoberfläche eines Werkstücks, wobei mittels eines Bearbeitungswerkzeuges die Werkstückoberfläche bearbeitet wird.

Die US 4,337,566 beschreibt ein Verfahren, bei dem in eine zu bearbeitende Werkfläche zunächst Vertiefungen eingebracht werden. Die Vertiefungen besitzen vom Rand her bis zum Zentrum an Tiefe zunehmende Wandungen, die vor dem spanenden Bearbeiten eingefärbt werden, so dass sich im Zuge des Materialabtrages eingefärbte Kreise ausbilden, deren Durchmesser ein Maß für das noch abzutragende Material bilden.

Die WO97/15403 beschreibt ein Verfahren zum Ausbessern von Beschichtungsfehlern, bei dem eine Vorrichtung benutzt wird, die sich mit Stützfüßen auf der zu bearbeitenden Oberfläche abstützt.

Die CA 2 058 212 C offenbart ein Verfahren zum Planfräsen einer Oberfläche, wobei sich das Bearbeitungswerkzeug auf Rädern abstützt, die über die zu bearbeitende Oberfläche rollen.

Das erfindungsgemäße Verfahren befasst sich mit der Fertigung von innerhalb eines gewissen Toleranzbereichs liegenden Flächen und insbesondere mit dem Problem, Oberflächen von Werkstücken plan zu bearbeiten. Bei der Bearbeitung von Flächen an Werkstükken mittels zerspanender mechanischer Bearbeitungsverfahren besteht häufig die Notwendigkeit, die Verarbeitungsmaschine an einer vorgegebenen Geometrie auszurichten. Problematisch wird dies, wenn große Flächen in situ, also außerhalb einer Fertigungshalle und insbesondere auf einer Baustelle zu bearbeiten sind. Als Beispiel für eine derartige Bearbeitung wird die Flanschbearbeitung an einer Windkraftanlage bzw. bei einem Drehkran und an einem Großdieselmotor genannt. Bei der Windkraftanlage ist die den Generator und die Flügel tragende Gondel ebenso wie das Kranhaus bei einem Kran auf einem Drehlager gelagert. Das Drehlager ist dabei auf einem ringförmigen Flansch befestigt. Dieser muss für eine einwandfreie und vor allen Dingen dauerhafte Funktion des Drehlagers eine bestimmte, zumeist vom Lagerhersteller vorgegebene Planität aufweisen. Vielfach ist die geforderte Planität durch eine Verformung des Gesamtbauwerks nicht mehr gegeben oder sie war von Anbeginn nie vorhanden, so dass das eingesetzte Lager vorzeitig verschleißt. In beiden Fällen ist eine Nachbearbeitung der Flanschfläche erforderlich. Dies erfolgt beim Stand der Technik mit einer Fräs- oder Drehmaschine, die im Bereich des Flansches fest mit dem den Flansch tragenden Turm befestigt wird. Diese Vorrichtung trägt im Wesentlichen ein großes, zentrisches Drehlager, welches einen Dreharm lagert, an dessen Ende der Drehstahl oder der Fräskopf sitzt. Die Vorrichtung muss mittels geeigneter Verfahren exakt ausgerichtet werden.

Bei der Bearbeitung der Zylinderkopffläche von Großdieselmotoren erfolgt die Bearbeitung mit einer Fräsvorrichtung die an massiven Maschinenbetten geführt wird.

Nachteilhaft an dem Verfahren ist einerseits das große Gewicht der Vorrichtung und andererseits die hohen Bearbeitungskosten.

Des Weiteren ist die erreichbare Genauigkeit der Bearbeitung abhängig von der mechanischen Maßverkörperung, die wiederum aus einem großen Wälzlager oder einem Linearführungssystem besteht. Eine durchgreifende Kontrolle, ob die Bearbeitung den gewünschten Erfolg gebracht hat, ist mit dem Bearbeitungssystem allein somit nicht durchführbar.

Der Erfindung liegt daher die Aufgabe zugrunde, das gattungsgemäße Verfahren gebrauchvorteilhaft weiterzubilden.

Gelöst wird die Aufgabe durch die in den Ansprüchen angegebene Erfindung, wobei jeder Anspruch eine eigenständige Lösung darstellt und mit jedem anderen Anspruch kombinierbar ist.

Der Anspruch 1 sieht zunächst und im Wesentlichen vor, dass die Referenzfläche durch Einbringen von Vertiefungen in die Werkstückoberfläche festgelegt wird, wobei die Böden der Vertiefungen Stützstellen der Referenzfläche bilden.

Bei dem erfindungsgemäßen Verfahren wird zunächst eine Referenzfläche festgelegt. Dies kann wie beim Stand der Technik auch über ein Laser-Nivelliergerät erfolgen. Bei der Referenzfläche kann es sich um eine Ebene handeln. Mit dem Bearbeitungswerkzeug wird dann der Referenzfläche folgend die Werkfläche derart bearbeitet, dass ihr Verlauf im Wesentlichen dem Verlauf der Referenzfläche entspricht. Es ist aber auch möglich, dass die anhand der Referenzfläche gefertigte Fertigfläche um ein vorbestimmtes Maß von der Referenzfläche abweicht. Die Referenzfläche muss keine Ebene sein. Sie kann auch von einer anders geformten Fläche gebildet sein. Zum Festlegen der Referenzfläche wird bevorzugt eine Bezugsebene als Nivellierebene verwendet. Die Bezugsebene kann dabei von einem Laserstrahl definiert werden, wobei hier ein flächenaufgeweiteter oder in einer Ebene rotierender Laserstrahl verwendet wird. Von dieser Nivellierebene besitzt jede Stützstelle ein ihr zugeordnetes Abstandsmaß, wobei das Abstandsmaß vom Ort der Stützstelle auf der zu bearbeitenden Fläche abhängt. Im einfachsten Fall, in dem die Referenzfläche eine Ebene ist und diese Referenzebene parallel zur Nivellierungsebene verläuft, haben alle Stützstellen also Böden der Vertiefungen denselben Abstand zur Nivellierebene. Die Vertiefungen und damit die Stützstellen werden durch mechanische Zerspanung erzeugt. Dies erfolgt unter Einbeziehung der Bezugsebene, also beispielsweise eines von einem Nivellierlaser erzeugten Laserstrahl. Die Schneidfront des Werkzeugs ist bevorzugt ringförmig, so dass ringförmige Vertiefungen gefertigt werden. Das zur Fertigung der Vertiefungen zu verwendende Gerät ist bevorzugt eine Ständerbohrmaschine und weiter bevorzugt eine Magnetständerbohrmaschine. Mittels des Magneten des Ständers der Bohrmaschine kann das Bohrgerät auf der stählernen Werkfläche fixiert werden. Die Werkstückspindel oder ein am Bohrer axial festes Aggregat trägt ein Mess/Anzeigeelement, an dem die Lage der Schneidenfront in Bezug auf die Bezugsebene abgelesen werden kann und insbesondere der Abstand der Schneidenfront des Bohrers von der Nivellierungsebene. Dies erfolgt bevorzugt rechnergestützt. Es wird somit zunächst eine Bezugsebene als Nivellierungsebene erzeugt, wozu bekannte Laservermessungseinrichtungen verwendet werden können. Ein Rotationslaser wird mit Hilfe von Laserempfängern so eingerichtet, dass sein um eine Rotationsachse drehbarer Laserstrahl in einer Ebene liegt, die möglichst parallel zur Werkfläche oder zur gewünschten Fertigfläche verläuft. Anstelle eines Laserstrahls können aber auch andere optische oder elektromagnetische oder gegebenenfalls auch akustische Nivelliergeräte verwendet werden. Mit Hilfe der auf eine derartige Weise eingerichteten Bezugsebene werden in einem zweiten Verfahrensschritt an einer Vielzahl von Stellen auf der Werkstückoberfläche Vertiefungen gebohrt. Die Vertiefungen können wahllos auf der Werkstückoberfläche verteilt angeordnet sein. Bevorzugt sind sie aber in etwa gleichmäßig über die Werkstückoberfläche verteilt. Die Fertigung der Vertiefungen erfolgt mit dem zuvor erörterten Bohrgerät. Damit werden eine Vielzahl ringförmiger Bohrungen gesetzt, wobei während des Bohrens die Tiefe ständig mit Hilfe des Empfängers an der Bohrspindel kontrolliert wird. Der Bohrvorgang wird beendet, wenn die Schneidenebene des Bohrers die Referenzfläche, also den vorbestimmten Abstand von der Bezugsebene erreicht hat. Diese Abstände können ortsabhängig sein. Die Abstände sind insbesondere dann ortsabhängig, wenn die Bezugsebene nicht parallel zur Referenzebene liegt. Die Ortsbestimmung des Ortes der zu fertigenden Vertiefung kann auch mit Hilfe der Lasermesseinrichtung erfolgen. Bevorzugt wird die vom Laserstrahl gebildete Bezugsebene dynamisch fixiert. Dies ist dann erforderlich, wenn sich das Bauwerk, an dem die Werkstückoberfläche plangefräst werden soll, während der Bearbeitung bewegt. Die dynamische Fixierung erfolgt mit Hilfe von bevorzugt zwei auf dem Werkstück angeordneten Empfängern, die mit einem Rechner verbunden sind, der auch den Laser steuern kann. Die Empfänger bilden zusammen mit dem Laser einen rechten Winkel, so dass Bewegungen, insbesondere Schwankungen dynamisch ausgeglichen werden können. Wurden nach dem zuvor beschriebenen Verfahren eine Vielzahl gleichmäßig verteilter Vertiefungen gefertigt, deren Böden in der Referenzfläche liegen, erfolgt das eigentliche Planbearbeiten der Werkfläche. Dies kann zu einem späteren Zeitpunkt und unabhängig von der bisherigen Arbeit erfolgen. Hierzu kann ein transportables Planbearbeitungswerkzeug verwendet werden. Es handelt sich dabei um ein kleines Gerät mit einem Kreuztisch, welches auf beispielsweise drei Füße aufgeständert werden kann. Die Füße dieses Planbearbeitungswerkzeuges sind so gestaltet, dass sie in die Vertiefungen eingesetzt werden können. Die Standflächen der Füße liegen dann auf den planen Ringböden der Vertiefungen. Das Planbearbeitungswerkzeug hat somit eine definierte Lage in Bezug auf die Referenzfläche. Mit einem Fräskopf des Planbearbeitungswerkzeuges wird nun eine Teilfläche der Werkstückoberfläche bearbeitet. Die Werkstückoberfläche wird insbesondere im Bereich ein oder mehrerer Vertiefungen spanend abgetragen, bis dieser Teilbereich der Werkfläche das Niveau des Bodens der Vertiefung bzw. der Vertiefungen erreicht hat. Um die Lage der Vertiefung zu einem späteren Zeitpunkt noch erkennen zu können, kann es ausreichen, dass sich die Lage der Fertigfläche um wenige tausendstel mm von der Referenzfläche unterscheidet. Nachdem eine erste Teilfläche in dieser Weise plan bearbeitet worden ist, wird das mobile Planbearbeitungswerkzeug umgesetzt. Es wird dann eine weitere Teilfläche bearbeitet. Durch geeignete Wahl der Orte der Vertiefungen können sich überlappende Teilflächen entstehen, so dass Schritt für Schritt im Wege einer Teilflächenbearbeitung die gesamte Werkfläche auf das Niveau einer Fertigfläche plan bearbeitet wird. Es wird als besonders vorteilhaft angesehen, dass lediglich das Setzen der Stützstellen, welche punktartig die Lage einer Referenzfläche definieren, die Verwendung eines Laser-Messwerkzeuges erforderlich macht. Die anschließende Fräsbearbeitung benötigt keine aufwendige Messtechnik, sondern lediglich ein Planbearbeitungswerkzeug, dessen Fräskopf so eingestellt ist, dass seine Stirnfläche in der Standfläche der Füße des Planbearbeitungswerkzeuges liegt. Durch mehrfaches Umsetzen des Planbearbeitungswerkzeuges wird die gesamte Werkfläche dann plan bearbeitet.

Ein Ausführungsbeispiel der Erfindung wird nachfolgend anhand beigefügter Zeichnungen erläutert. Das dargestellt Beispiel bezieht sich auf die Bearbeitung eines Flansches. Ebenso könnte jedoch auch eine rechteckige Fläche als Beispiel dienen. Es zeigen:
- Fig. 1: in einer perspektivischen Darstellung grob schematisch den Aufbau der Lasermessgeräte, bestehend au seinem Rotationslaser 7 und ei- nem oder mehreren an unterschiedlichen Umfangspositionen des als Werkstück beispielhaft dargestellten Ringflansches angeordnete La- serempfänger 8.
- Fig. 2: eine Darstellung gemäß Figur 1, jedoch mit auf der Werkstückober- fläche angeordnetem Bohrgerät zum Fertigen der Vertiefungen,
- Fig. 3: eine Draufsicht auf die Darstellung gemäß Figur 2,
- Fig. 4: einen Schnitt gemäß der Linie IV-IV in Figur 3,
- Fig. 5: eine Darstellung ähnlich gemäß Figur 4 zur Verdeutlichung der Lage von Bezugsebene 6, Referenzfläche 3 und Werkstückoberfläche 2,
- Fig. 6: eine Darstellung gemäß Figur 1 mit auf die zu bearbeitende Werk- stückoberfläche 2 aufgesetzten Planfräsgerät 16,
- Fig. 7: eine Draufsicht auf die Anordnung gemäß Figur 6,
- Fig. 8: einen Schnitt gemäß der Linie VIII-VIII in Figur 7 und
- Fig. 9: einen Schnitt gemäß der Linie IX-IX in Figur 7.

Als Werkstück wird zur Erläuterung des Ausführungsbeispiels ein Ringflansch 1 gewählt. Das erfindungsgemäße Verfahren ist jedoch nicht auf die Bearbeitung derartiger Ringflansche beschränkt, sondern auf sämtliche Oberflächen von Werkstücken, insbesondere aus Stahl, die plan bearbeitet werden sollen. In Betracht kommen hier Oberflächen von Zylinderköpfen von Motoren und insbesondere Schiffsmotoren, die an Ort und Stelle (in situ) überholt werden müssen. Auch andere ortsfeste Werkstücke können mit dem nachfolgenden im Detail beschriebenen Verfahren bearbeitet werden.

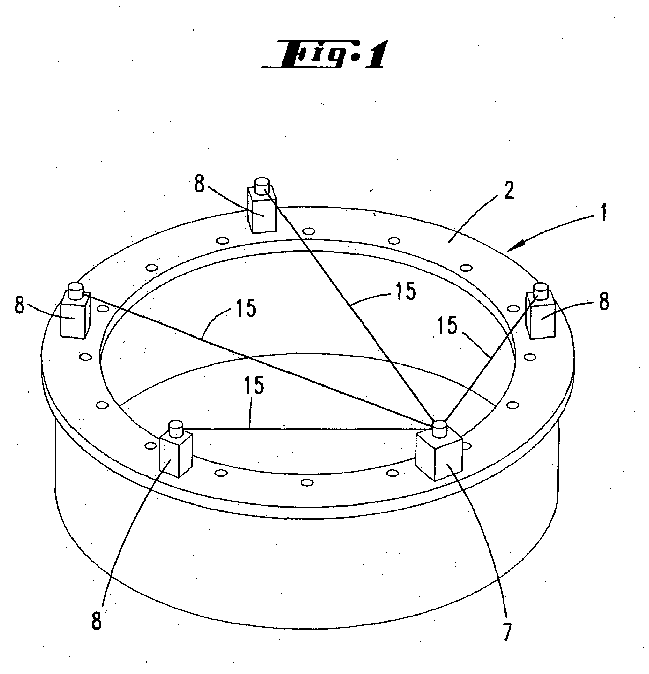

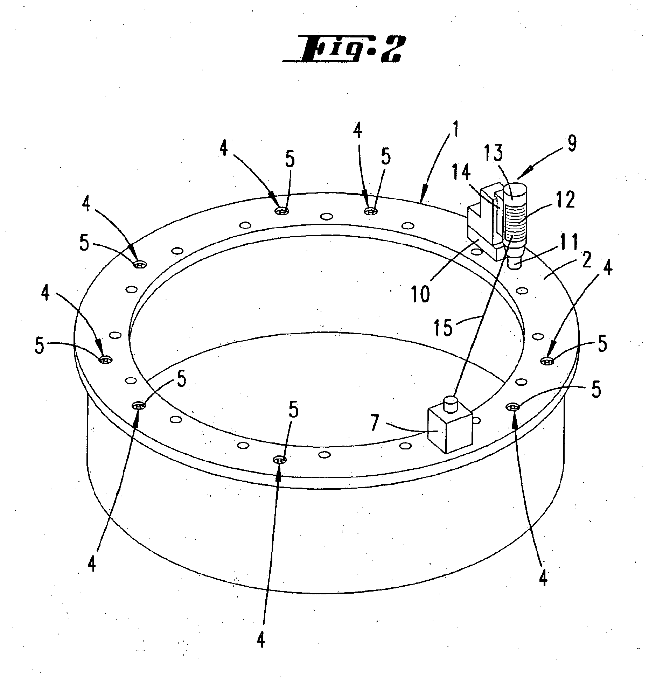

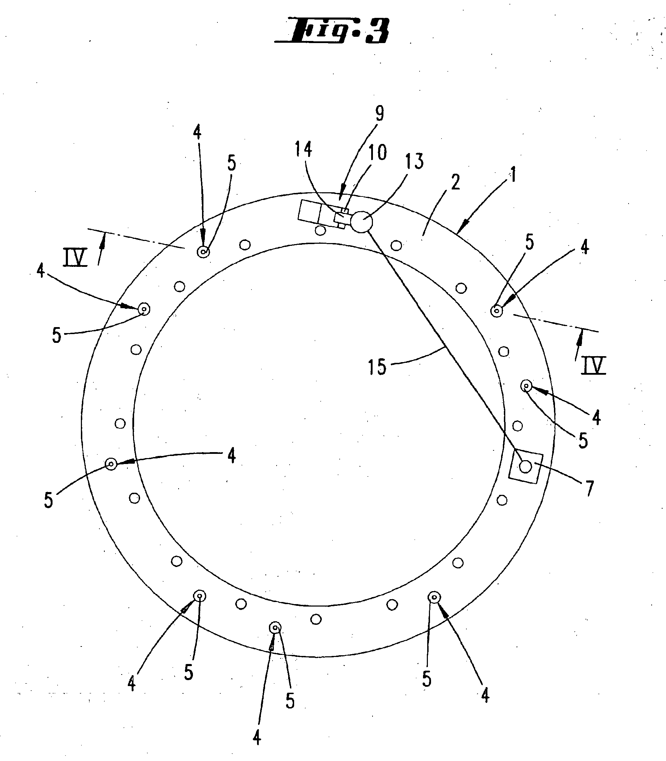

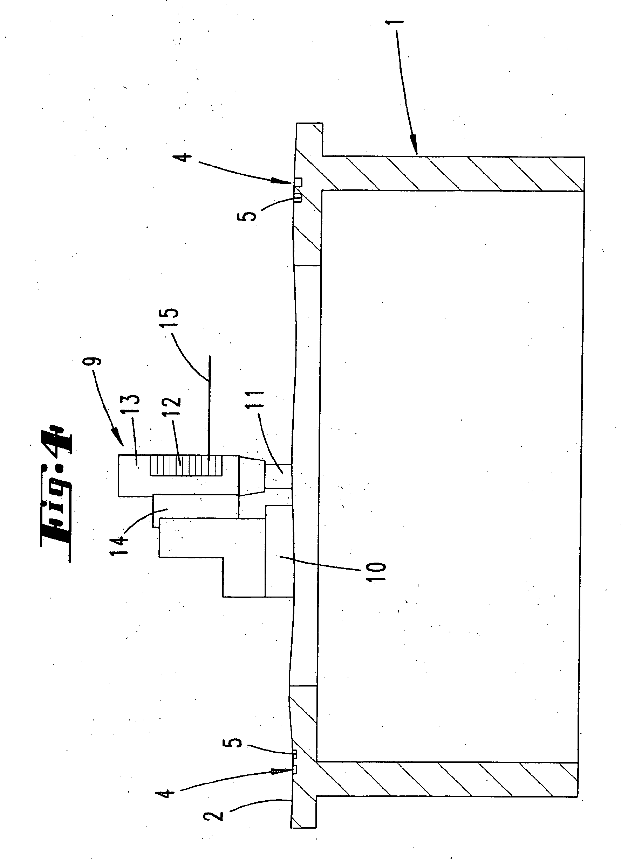

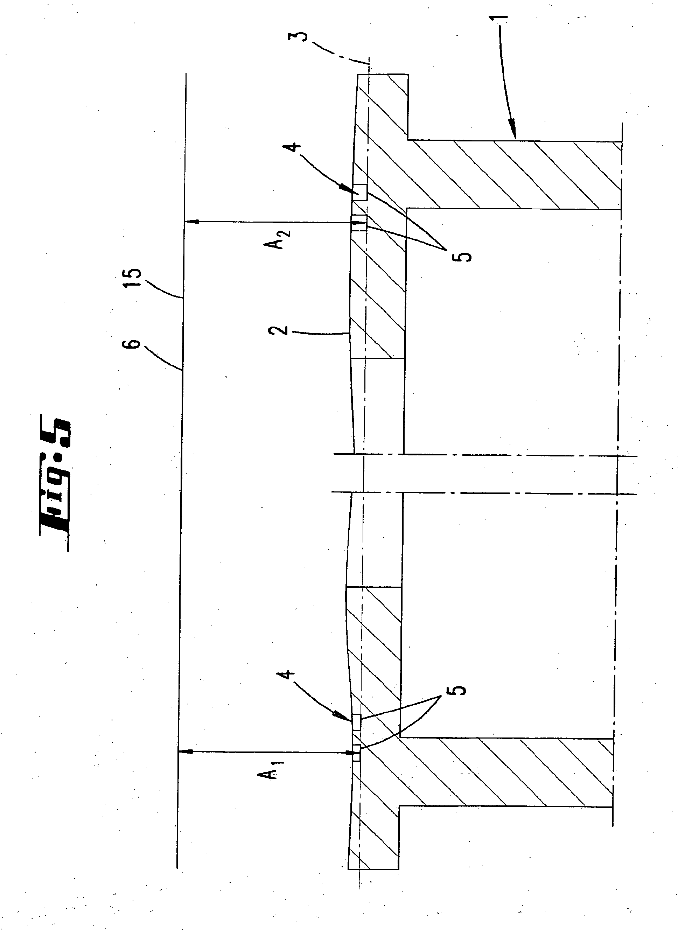

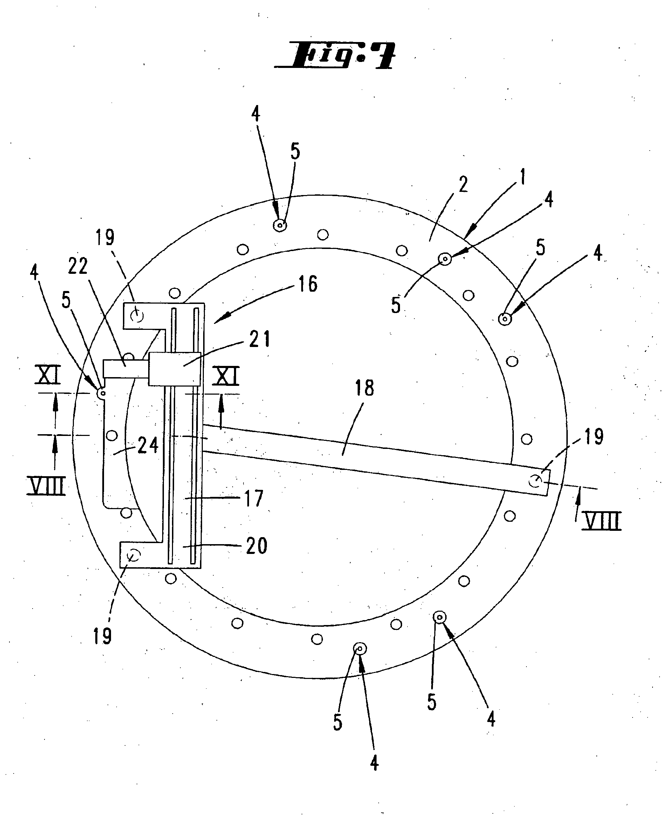

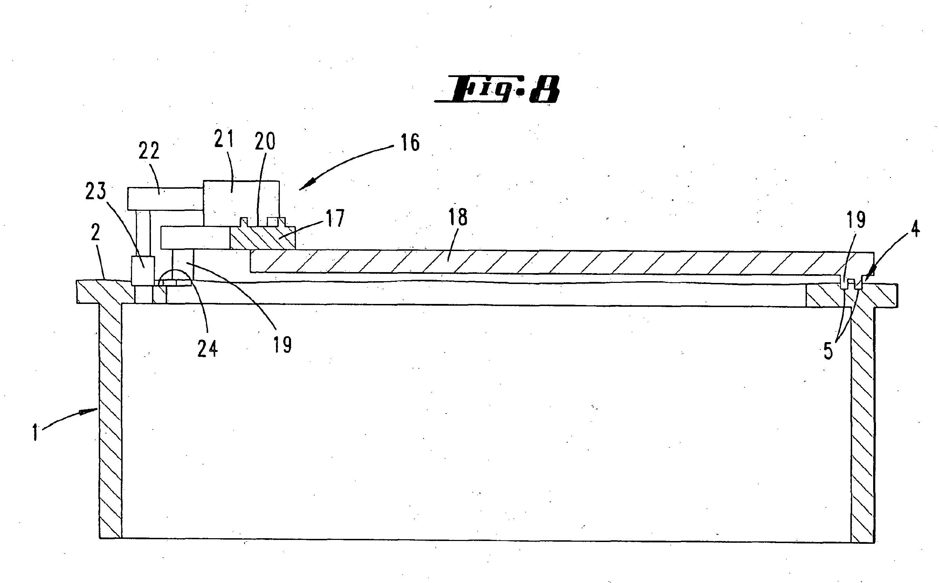

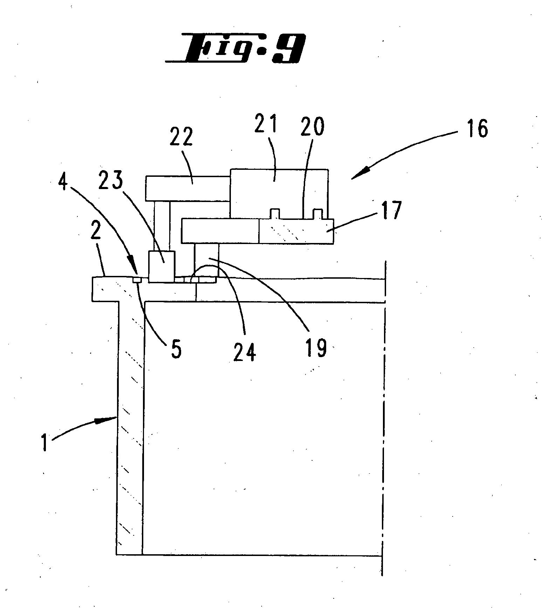

Bei der in den Figuren 1 bis 9 dargestellten Werkfläche 2 handelt es sich um eine nicht plane Oberfläche. Der nicht Planverlauf der Oberfläche 2 ist in der Figur 5 übertrieben dargestellt.

Mit einem Lasermessgerät wird zunächst die zu bearbeitende Werkstückoberfläche 2 vermessen. Hierzu dient im Ausführungsbeispiel ein Rotationslaser 7, der mit ein oder mehreren Laserempfängern 8 zusammenwirkt. Durch Versetzen des Empfängers 8 kann der genaue Verlauf der Ist-Oberfläche 2 bestimmt werden.

Aus diesem Ist-Verlauf der Werkfläche 2 wird der Verlauf einer Fertigfläche berechnet, der durch spanenden Materialabtrag von der Werkfläche 2 erzeugt werden soll.

Beim Ausführungsbeispiel dient der Rotationslaser 7 des Weiteren dazu, eine Bezugsebene 6 zu definieren. Diese wird bevorzugt in eine Parallelebene zur Referenzfläche 3 gelegt.

Mit Hilfe eines Bohrgerätes 9 werden sodann in im Wesentlichen wahlloser Anordnung aber etwa gleichmäßig verteilt um den Umfang des Ringflansches Vertiefungen 4 gebohrt.

Das Bohrgerät 9 besitzt einen Magnetständer 10, mit dem es auf der Werkfläche 2 fixierbar ist. Das Bohrgerät 9 trägt einen Vertikalschlitten 14, an dem eine Bohrspindel 13 befestigt ist. Die Bohrspindel 13 treibt einen Fräser 11 an, der eine ringförmige Nut schneidet. Die Spindel 13 steht rechtwinklig zur Referenzfläche 3. Auf der Spindel 13 sitzt ein Laserempfänger 12, welcher mit dem die Bezugsebene 6 definierenden Laserstrahl 15 des Rotationslasers 7 zusammen wirkt. Am Empfänger kann die Tiefe der Bohrung abgelesen werden. Mit dem Bohrgerät 9 wird somit eine ringförmige Nut 4 gebohrt, deren Boden 5 einen vorbestimmten Abstand A1 bzw. A2 von der Bezugsebene 6 besitzt. Verlaufen Bezugsebene 6 und Referenzfläche 3 parallel zueinander, so haben die Bohrungen bezogen auf die Bezugsebene immer dieselbe Tiefe. Die Abstände A zwischen Bezugsebene 6 und Referenzfläche 3 sind an jedem Ort identisch. Die Abstände A1, A2 können aber auch voneinander verschieden, d.h. ortsabhängig sein, wenn einerseits die Referenzfläche 3 nicht eben sein soll oder andererseits keine Parallellage zwischen Referenzfläche 3 und Nivellierungsebene 6 existiert.

Im einfachsten Fall wird vom Bediener die Spindel 13 solange nach unten bewegt, bis der Laserstrahl 15 auf dem Messfeld 12 eine vorgegebene Stelle erreicht hat, die der Solltiefe entspricht. Dies kann jedoch auch durch eine automatische Vorrichtung erfolgen.

Wie die Figur 5 verdeutlicht, liegen - sofern es sich bei der Referenzfläche 3 um eine Ebene handelt - die Böden 5 der Vertiefungen in einer gemeinsamen Ebene 3, bei der es sich um die Referenzfläche handelt. Die Referenzfläche 3 hat somit nach dem Fertigen der Vielzahl von Vertiefungen 4 eine entsprechende Anzahl von physikalischen Stützstellen, die jeweils durch den ringförmigen ebenen Boden 5 der Vertiefungen definiert sind.

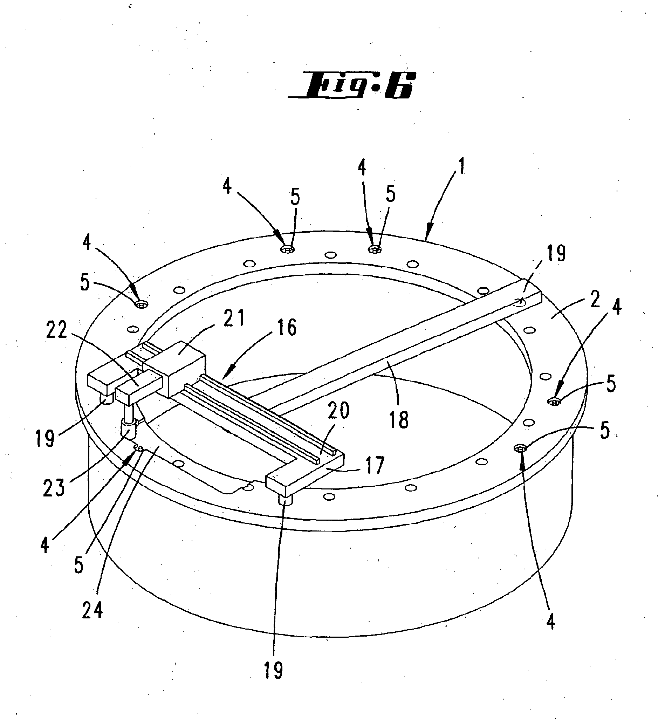

In einem weiteren Bearbeitungsschritt, den die Figuren 6 bis 9 zeigen, wird die Werkstückoberfläche 2 spanabtragend bearbeitet. Hierzu wird eine mobile Planfräseinrichtung 16 verwendet. Letztere besteht aus einem Träger 17, von dem zwei in der Ebene des Trägers verschiebbare Füße 19 abragen. Vom Träger 17 ragt nach rückwärts ein Ausleger 18 ab, der ebenfalls einen verstellbaren Fuß 19 besitzt. Die Füße können in der Ebene bevorzugt, nicht jedoch in der Höhe verstellt werden. Sie sind in der Höhe voreingestellt.

Die Füße 19 werden nun in jeweils eine Vertiefung 4 eingesetzt, so dass ihre Standflächen auf den Böden 5 der Vertiefungen 4 liegen.

Der Träger 17 besitzt eine Linearführung 20, auf der ein Schlitten 21 linear geführt ist. Aus dem Schlitten 21 ragt quer zur Führung 20 ein Arm 22, so dass der am Ende des Armes 22 angeordnete Fräskopf 23 kreuztischartig in einer Ebene bewegt werden kann. Die Stirnfläche des Fräskopfes 23 ist so eingestellt, dass sie in der Standebene der Füße 19 liegt. Mit dem Fräskopf 23 kann somit eine Fertigfläche 24 gefräst werden, die in der Referenzfläche 3 liegt. Das Planfräsen kann auch mehrstufig in mehreren aufeinander folgenden Schritten erfolgen.

Der Fräskopf 23 kann aber auch eine um wenige tausendstel mm versetzt zur Referenzfläche 3 liegende Fertigfläche 24 bearbeiten, so dass die Lage der Böden 5 noch erkennbar ist.

Ausgehend von der in Figur 6 dargestellten Betriebsstellung wird mit Hilfe des Fräskopfes 23 ein Umfangssegment plan bearbeitet. Innerhalb dieses Umfangssegmentes liegt zumindest eine Vertiefung 4.

Nach Fräsen des ersten Segmentes wird die Fräsanordnung 16 versetzt und ein weiteres Segment gefräst. Da sich die einzelnen Segmente überlappen, wird schrittweise die gesamte Werkstückoberfläche 2 bearbeitet.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Verfahren zum zerspanenden Bearbeiten einer Werkstückoberfläche (2) eines Werkstücks (1), wobei ausgehend von einer zunächst festgelegten Referenzfläche (3) mittels eines Bearbeitungswerkzeuges (23) die Werkstückoberfläche (2) bearbeitet wird, wobei die Referenzfläche (3) durch Einbringen von Vertiefungen (4) in die Werkfläche (2) festgelegt wird, wobei die planen Böden (5) der Vertiefungen (4) Stützstellen der Referenzfläche (3) bilden.

2. Verfahren zum zerspanenden Bearbeiten einer Werkstückoberfläche (2) eines Werkstücks (1), wobei ausgehend von einer zunächst festgelegten Referenzfläche (3) mittels eines Bearbeitungswerkzeuges (23) die Werkstückoberfläche (2) bearbeitet wird, **dadurch gekennzeichnet, dass** die Referenzfläche (3) durch Einbringen von Vertiefungen (4) in die Werkfläche (2) festgelegt wird, wobei die Böden (5) der Vertiefungen (4) Stützstellen der Referenzfläche (3) bilden, wobei zur Bearbeitung einer Teilfläche (1) ein auf einige der Böden (5) der Vertiefungen (4) aufsetzbares Planbearbeitungswerkzeug (16) verwendet wird.

3. Verfahren nach Anspruch 1 oder 2, **dadurch gekennzeichnet, dass** zum Festlegen der Referenzfläche (3) eine Bezugsebene (6) verwendet wird, von welcher bezogen auf den Ort jeder Stützstelle (5) auf der Werkfläche (2) ein Abstandsmaß (A1, A2) des Bodens (5) der der Stützstelle zugeordneten Vertiefung (4) zur Bezugsebene (6) bestimmt wird, wobei gemäß dem so bestimmten Abstandsmaß (A1, A2) die Vertiefung (4) erzeugt wird.

4. Verfahren nach einem oder mehreren der vorhergehenden Ansprüche, **dadurch gekennzeichnet, dass** die Bezugsfläche (6) von einem eine Fläche überstreichenden Laserstrahl gebildet wird.

5. Verfahren nach einem oder mehreren der vorhergehenden Ansprüche, **dadurch gekennzeichnet, dass** die Vertiefungen (4) durch Bohren oder Fräsen erzeugt werden.

6. Verfahren nach einem oder mehreren der vorhergehenden Ansprüche, **dadurch gekennzeichnet, dass** die Böden (5) der Vertiefungen (4) eine Ringform aufweisen.

7. Verfahren nach einem oder mehreren der vorhergehenden Ansprüche, **dadurch gekennzeichnet, dass** benachbart zur zu fertigenden Vertiefung (4) ein Bohrgerät auf die Werkfläche (2) aufgeständert wird, deren Bohrspindel (13) ah ein Empfängerelement (12) gekoppelt ist, welcher die Lage der Schneidenfront des Bohrers (11) zur Bezugsebene (6) misst/ anzeigt.

8. Verfahren nach einem oder mehreren der vorhergehenden Ansprüche, **dadurch gekennzeichnet, dass** die Bearbeitung der Werkstückoberfläche (2) im Wege einer Teilflächenbearbeitung erfolgt, wobei jeweils eine an eine Stützstelle (5) angrenzende Teilfläche unter Berücksichtigung mindestens einer weiteren insbesondere direkt benachbarten Stützstelle (5) bearbeitet wird.

9. Verfahren nach einem oder mehreren der vorhergehenden Ansprüche, **dadurch gekennzeichnet, dass** in einem zwei Stützstellen (5) aufweisenden Abschnitt der Werkstückoberfläche (2) ein Materialabtrag bis auf eine Fertigfläche (24) erfolgt, in welcher Fertigfläche (24) der Boden (5) mindestens einer Vertiefung (4) liegt oder von welcher der Boden (5) mindestens einer Vertiefung um ein definiertes Maß entfernt liegt.

10. Verfahren nach einem oder mehreren der vorhergehenden Ansprüche, **dadurch gekennzeichnet, dass** das Planbearbeitungswerkzeug eine Fräsanordnung (16) ist, die mit Hilfe von mindestens drei Füßen (19) jeweils auf Böden (5) der Vertiefungen (4) steht und deren Fräskopf (23) in der Standebene vorschiebbar ist.

## Claims

1. Method for machining a workpiece surface (2) of a workpiece (1), wherein the workpiece surface (2) is machined by a machine tool (23) on the basis of an initially established reference surface (3), wherein the reference surface (3) is established by introducing recesses (4) into the work surface (2), the planar bottoms (5) of the recesses (4) forming support points of the reference surface (3).

2. Method for machining a workpiece surface (2) of a workpiece (1), wherein the workpiece surface (2) is machined by a machine tool (23) on the basis of an initially established reference surface (3), **characterised in that** the reference surface (3) is established by introducing recesses (4) into the work surface (2), the bottoms (5) of the recesses (4) forming support points of the reference surface (3), wherein a planar machine tool (16) which can be placed on some of the bottoms (5) of the recesses (4) is used to machine a partial area (1).

3. Method according to claim 1 or 2, **characterised in that** a reference plane (6) is used to establish the reference surface (3), from which reference plane, based on the location of each support point (5) on the work surface (2), a distance measurement (A1, A2) between the bottom (5) of the recess (4) associated with the support point and the reference plane (6) is determined, wherein the recess (5) is produced in accordance with the distance measurement (A1, A2) thus determined.

4. Method according to any one or more of the preceding claims, **characterised in that** the reference surface (6) is formed by a laser beam sweeping over a surface.

5. Method according to any one or more of the preceding claims, **characterised in that** the recesses (4) are produced by drilling or milling.

6. Method according to any one or more of the preceding claims, **characterised in that** the bottoms (5) of the recesses (4) are annular.

7. Method according to any one or more of the preceding claims, **characterised in that** a drilling tool is mounted on the work surface (2) adjacent to the recess (4) to be created, the drilling spindle (13) of which drilling tool is coupled to a receiver element (12) which measures/displays the position of the cutting front of the drill (11) relative to the reference plane (6).

8. Method according to any one or more of the preceding claims, **characterised in that** the workpiece surface (2) is machined in the context of partial area machining, wherein in each case a partial area abutting a support point (5) is machined with consideration of at least one further, in particular directly adjacent support point (5).

9. Method according to any one or more of the preceding claims, **characterised in that**, in a portion of the workpiece surface (2) comprising two support points (5), material is removed apart from a finishing surface (24), the bottom (5) of at least one recess (4) lying in said finishing surface (24), or the bottom (5) of at least one recess lying at a defined distance from said finishing surface.

10. Method according to any one or more of the preceding claims, **characterised in that** the planar machine tool is a milling assembly (16) which stands with the aid of at least three feet (19) in each case on bottoms (5) of the recesses (4) and of which the milling head (23) can be advanced within the vertical plane.

## Revendications

1. Procédé d'usinage, avec production de copeaux, d'une surface de pièce d'oeuvre (2) d'une pièce d'oeuvre (1), où, en partant d'une surface de référence (3) fixée en premier lieu, la surface de pièce d'oeuvre (2) est usinée au moyen d'un outil d'usinage (23), **caractérisé en ce que** la surface de référence (3) est fixée par introduction de cavités (4) dans la surface de pièce d'oeuvre (2), les fonds (5) des cavités (4) formant des points d'appui de la surface de référence (3).

2. Procédé d'usinage, avec production de copeaux, d'une surface de pièce d'oeuvre (2) d'une pièce d'oeuvre (1), où, en partant d'une surface de référence (3) fixée en premier lieu, la surface de pièce d'oeuvre (2) est usinée au moyen d'un outil d'usinage (23), où, la surface de référence (3) est fixée par introduction de cavités (4) dans la surface de pièce d'oeuvre (2), les fonds (5) des cavités (4) formant des points d'appui de la surface de référence (3), où, un outil de dressage (16), susceptible d'être posé sur quelques uns des fonds (5) des cavités (4), est utilisé pour l'usinage d'une surface partielle (1).

3. Procédé selon la revendication 1 ou 2, **caractérisé en ce que**, pour fixer la surface de référence (3), est utilisé un plan de référence (6), dont, en se référant au site de chaque point d'appui (5) sur la surface de pièce d'oeuvre (2), une distance d'espacement (A1, A2) du fond (5) du creusement (4), associé au point d'appui, par rapport au plan de référence est déterminé, la cavité (5) étant produite selon la distance d'espacement (A1, A2) ainsi déterminée.

4. Procédé selon l'une ou plusieurs des revendications précédentes, **caractérisé en ce que** la surface de référence (6) est formée par un faisceau laser balayant une surface.

5. Procédé selon l'une ou plusieurs des revendications précédentes, **caractérisé en ce que** les cavités (4) sont produites par perçage ou fraisage.

6. Procédé selon l'une ou plusieurs des revendications précédentes, **caractérisé en ce que** les fonds (5) des cavités (4) présentent une forme d'anneau.

7. Procédé selon l'une ou plusieurs des revendications précédentes, **caractérisé en ce que**, au voisinage de la cavité (4) à produire, un appareil de perçage est posé sur la surface de pièce d'oeuvre (2), dont la broche de perçage (13) est couplée à un élément récepteur (12), mesurant/affichant la position du front de coupe du foret (11) par rapport au plan de référence (6).

8. Procédé selon l'une ou plusieurs des revendications précédentes, **caractérisé en ce que** l'usinage de la surface de pièce d'oeuvre (2) s'effectue au cours d'un usinage de surfaces partielles, chaque fois une surface partielle, limitrophe à un point d'appui (5), étant usinée en prenant en considération au moins un autre point d'appui (5) en particulier directement voisin.

9. Procédé selon l'une ou plusieurs des revendications précédentes, **caractérisé en ce que**, dans un tronçon, présentant deux points d'appui (5), de la surface de pièce d'oeuvre (2) est effectué un enlèvement de matière, jusqu'à une surface terminée (24), surface terminée (24) dans laquelle se trouve le fond (5) d'au moins une cavité (4) ou dont le fond (5) d'au moins une cavité est éloigné d'une distance définie.

10. Procédé selon l'une ou plusieurs des revendications précédentes, **caractérisé en ce que** l'outil de dressage est un agencement de fraise (16), placé chaque fois sur des fonds (5) des cavités (4), à l'aide d'au moins trois pieds (19), et dont la tête de fraisage (23) est susceptible d'être avancée dans le plan de pose.
